# EUROPÄISCHE PATENTSCHRIFT

(11) **EP 3 684 573 B1**
(45) Veröffentlichungstag und Bekanntmachung des Hinweises auf die Patenterteilung: **24.01.2024**
(21) Anmeldenummer: 18774006.3
(22) Anmeldetag: 20.09.2018
(51) Int. Cl.: B27N 3/00, C08L 97/02

(54) **BINDEMITTEL FÜR CELLULOSEHALTIGE MATERIALIEN**
BINDER FOR CELLULOSE-CONTAINING MATERIALS
AGENT LIANT POUR MATÉRIAUX CELLULOSIQUES

(30) Priorität: 20.09.2017 EP 17192254
(43) Veröffentlichungstag der Anmeldung: 29.07.2020
(73) Patentinhaber: Sestec Sp. z o.o., 31-864 Krakow (PL)
(72) Erfinder: EDELMANN, Hans-Joachim, 38667 Bad Harzburg (DE)
(74) Vertreter: Witek, Rafal
(86) Internationale Anmeldenummer: PCT/EP2018/075536
(87) Internationale Veröffentlichungsnummer: WO 2019/057853

(56) Entgegenhaltungen:
- EP-A1- 3 219 756
- WO-A1-2015/086074
- WO-A1-2015/162300

## Beschreibung

Die vorliegende Erfindung betrifft Bindemittel für cellulosehaltige Materialien, insbesondere Holz und Papier, die sich zur Herstellung von Verbundwerkstoffen, beispielsweise in Form von Platten, eignen.

Zur Herstellung von holzbasierten Verbundwerkstoffen werden industriell in großem Maßstab Aminoplaste verwendet, die durch Polykondensation von Formaldehyd mit NH-Gruppen enthaltenden Verbindungen gewonnen werden. Hierzu werden als Bindemittel niedermolekulare, kaum vernetzte Vorkondensate bereitgestellt, die bei der Herstellung der Verbundwerkstoffe u.a. unter der Einwirkung von Hitze zu quervernetzten Duroplasten härten. Als Holzbindemittel auf Basis von Aminoplasten werden vor allem Harnstoff-Formaldehyd-Harze (UF-Harze), Melamin-Formaldehyd-Harze (MF-Harze) und Dicyandiamid-Formaldehyd-Harze (DD-Harze) eingesetzt.

US 4,172,057 A beschreibt Harnstoff-Formaldehyd-Harze und Melamin-Formaldehyd-Harze, die durch Einbringung eines Hydroxyaldehyds oder Hydroxyketons wie Glucose modifiziert sind. Die modifizierten Harze werden zu Fasern verarbeitet und diese als Klebstoff für die Papierherstellung eingesetzt.

Ein bedeutender Nachteil der bekannten Holzbindemittel auf Basis von Aminoplasten ist, dass die damit hergestellten Verbundwerkstoffe das als krebserzeugend (Kategorie 1B gemäß Anhang VI der Verordnung 2008/1272/EG) eingestufte Formaldehyd abgeben. Bisherige Versuche, in Holzbindemitteln auf Basis von Aminoplasten Formaldehyd durch andere Carbonylverbindungen zu ersetzen, sind regelmäßig daran gescheitert, dass die alternativen Materialien zu teuer sind und die erhaltenen Bindemittel nicht die geforderten Eigenschaften insbesondere im Hinblick auf Härtungszeit, mechanische Stabilität und Wasserbeständigkeit haben.

WO 2015/086035 A1 und WO 2015/086074 A1 beschreiben Verfahren zur Herstellung formaldehydfreier Harze als Bindemittel für Verbundwerkstoffe auf Basis von Holz oder Naturfasern, bei denen ein Hydroxy-Monoaldehyd mit einem Amin, einem Amid oder einer aromatischen Hydroxyverbindung umgesetzt wird. Die Hydroxy-Monoaldehyde, insbesondere Glycolaldehyd oder Glycerinaldehyd, werden in einem vorgelagerten Syntheseschritt mit Hilfe einer Umpolungsreaktion aus Formaldehyd gebildet. Dieses Verfahren ist aufwändig und teuer und birgt zudem die Gefahr, dass nicht umgesetztes Formaldehyd aus dem vorgelagerten Syntheseschritt in das Harz und die daraus hergestellten Verbundwerkstoffe gelangt.

EP 3 219 756 A1 offenbart in den Beispielen 4, 5, 7, 8 und 9 Bindemittel für cellulosehaltige Materialen.

WO 2015/162300 A1 offenbart im Beispiel 4 ein aus Wasserstoffperoxid und Glycerin hergestelltes Hydroxyaldehyd und Blutpulver, möglicherweise mit der Zugabe der phenolische Oligomere umfassenden Komponente Ligninsulfonat.

Als Alternative zu Aminoplasten auf Formaldehydbasis sind bei der Herstellung von holzbasierten Verbundwerkstoffen in geringem Umfang auch Bindemittel auf Basis von Isocyanaten wie polymerem Diphenylmethandiisocyanat (PMDI) verwendet worden. Diese sind allerdings im Vergleich zu klassischen Aminoplasten um ein Vielfaches teurer. Äußerst problematisch ist zudem, dass unter Verwendung von Bindemitteln auf Basis von Isocyanaten hergestellte Verbundwerkstoffe im Brandfall oder bei der thermischen Verwertung erhebliche Mengen an Blausäure und anderen toxischen Cyanoverbindungen abgeben. Hinzu kommt, dass die nicht ausgehärteten Bindemittel auf Basis von Isocyanaten wie PMDI und die zu deren Herstellung eingesetzten Ausgangsstoffe wie Diphenylmethandiisocyanat (MDI) und Methylendiphenylamin (MDA) ebenfalls eine erhebliche Toxizität aufweisen. Bindemittel auf Basis von Isocyanaten können daher nicht als gesundheitlich und ökologisch unbedenkliche Alternative zu Bindemitteln auf Formaldehydbasis angesehen werden.

DE 10 2014 105 879 A1 beschreibt ein Verfahren zur Herstellung eines Verbundwerkstoffs, der ein cellulosehaltiges Substrat und ein mehrkomponentiges Bindemittel aufweist. Dabei enthält eine erste Komponente des Bindemittels Tierblut und eine zweite Komponente des Bindemittels mindestens ein Additiv aus der Gruppe Peroxid, Harnstoff, Alaun, Aluminiumsulfat, Natriumsulfit, Glycerin, Formaldehyd, Isocyanat, Hexamin, Natriumlaurylsulfat, Natriumsulfat, Aluminiumsalz, Ligninsulfonat, Wasserglas, Ethanol, Citronensäure, Natriumhydroxid und/oder Hydrowachs. Zur Verbesserung der Vernetzung des Bindemittels mit Holzspänen soll Formaldehyd oder ein Isocyanat verwendet werden.

Die bekannten Bindemittel für holzbasierte Verbundwerkstoffe weisen somit verschiedene Nachteile im Hinblick auf die mit ihnen verbundenen gesundheitlichen und ökologischen Risiken, ihre technischen Eigenschaften oder ihre Wirtschaftlichkeit auf.

Der Erfindung liegt daher die Aufgabe zugrunde, die Nachteile des Standes der Technik zu vermeiden und Bindemittel für cellulosehaltige Materialien wie Holz und Papier bereitzustellen, die hervorragende technische Eigenschaften, insbesondere im Hinblick auf die Verarbeitungszeiten sowie die mechanische Stabilität und die Wasserbeständigkeit der damit hergestellten Verbundwerkstoffe, aufweisen und vorzugsweise als Einkomponentensystem ohne Kühlung lager- und transportfähig sind. Die Bindemittel sollen zudem kostengünstig und insbesondere aus natürlichen Rohstoffen erhältlich sein. Es ist zudem wünschenswert, dass die Bindemittel weitgehend oder vollständig ohne gesundheitliche und ökologisch bedenkliche Komponenten wie Formaldehyd und Isocyanate erhalten werden können und die daraus hergestellten Verbundwerkstoffe frei von den entsprechenden Emissionen sind.

Gegenstand der Erfindung ist Bindemittel für cellulosehaltige Materialien, das
a) Hydroxyaldehyd,
b) proteinhaltige Komponente tierischen Ursprungs und
c) phenolische Oligomere umfassende Komponente enthält,
wobei:
die phenolischen Oligomere eine gewichtsmittlere molare Masse im Bereich von 1000 bis 5000 g/mol und insbesondere 2000 bis 3000 g/mol aufweisen
   und
die phenolische Oligomere enthaltende Komponente eine Kraft-Lignin ist.

Bevorzugt ist das erfindungsgemäße Bindemittel, bei dem der Hydroxyaldehyd ein α-Hydroxy-Aldehyd, insbesondere ein α-Hydroxy-C₂-C₁₀-Aldehyd, bevorzugt α-Hydroxy-C₃-C₁₀-Aldehyd, besonders bevorzugt ein α-Hydroxy-C₃-C₅-Aldehyd, ganz besonders bevorzugt ein α, β-Dihydroxy-C₃-C₅-Aldehyd und am meisten bevorzugt Glycerinaldehyd ist.

Bevorzugt ist das erfindungsgemäße Bindemittel, bei dem der Hydroxyaldehyd *in situ* aus einem Polyol mit mindestens zwei OH-Gruppen, insbesondere einem Polyol mit mindestens zwei vicinalen OH-Gruppen, bevorzugt einem C₂-C₁₀-Polyol mit mindestens zwei vicinalen OH-Gruppen, besonders bevorzugt einem C₃-C₁₀-Polyol mit mindestens zwei vicinalen OH-Gruppen, weiter bevorzugt einem C₃-C₅-Polyol mit mindestens zwei vicinalen OH-Gruppen, ganz besonders bevorzugt ein C₃-C₅-Polyol mit mindestens drei vicinalen OH-Gruppen und am meisten bevorzugt Glycerin, und einem Oxidationsmittel, insbesondere einem Peroxid und besonders bevorzugt Wasserstoffperoxid, gebildet wird.

Bevorzugt ist das erfindungsgemäße Bindemittel, bei dem die proteinhaltige Komponente tierischen Ursprungs Hämoglobin, insbesondere Hämoglobin aus Tierblut, enthält.

Bevorzugt ist das erfindungsgemäße Bindemittel, das ferner d) proteinhaltige Komponente pflanzlichen Ursprungs, insbesondere eine pflanzliche Schlempe, enthält.

Bevorzugt ist das erfindungsgemäße Bindemittel, das weitere proteinhaltige Komponente tierischen Ursprungs, insbesondere Casein, enthält.

Bevorzugt ist das erfindungsgemäße Bindemittel, das ferner ein Amid, vorzugsweise Caprolactam, Harnstoff oder insbesondere Melamin, und/oder einen Dialdehyd, vorzugsweise Glutaraldehyd oder insbesondere Glyoxal, enthält.

Bevorzugt ist das erfindungsgemäße Bindemittel, das ferner eine Carbonsäure, ein Carbonsäuresalz und/oder ein Carbonsäureanhydrid, insbesondere Essigsäure oder ein Acetat, Maleinsäure oder ein Maleat und/oder Maleinsäureanhydrid, enthält.

Bevorzugt ist das erfindungsgemäße Bindemittel, das einen pH-Wert im Bereich von 7 bis 12, insbesondere einen pH-Wert im Bereich von 8 bis 11, vorzugsweise einen pH-Wert im Bereich von 8,5 bis 10, bevorzugt einen pH-Wert im Bereich von 9 bis 10 und am meisten bevorzugt einen pH-Wert von etwa 9 aufweist.

Bevorzugt ist das erfindungsgemäße Bindemittel, das weniger als 5,0 Gew.-%, insbesondere weniger als 2,0 Gew.-%, bevorzugt weniger als 1,0 Gew.-%, besonders bevorzugt weniger als 0,5 Gew.-% Ammoniumsalze enthält und am meisten bevorzugt im Wesentlichen frei von Ammoniumsalzen ist.

Bevorzugt ist das erfindungsgemäße Bindemittel, das:
a) durch Mischen der folgenden Komponenten erhältlich ist, wobei mindestens eine und vorzugsweise alle Komponenten in den angegebenen Mengen eingesetzt werden:

| Komponente | Gew.-% |
|---|---|
| Polyol | 1-30, insbesondere 4-15 |
| Oxidationsmittel | 0,5-10, insbesondere 1,5-4 |
| proteinhaltige Komponente tierischen Ursprungs (Trockenmasse) | 1-20, insbesondere 3-10 |
| phenolische Oligomere enthaltende Komponente (Trockenmasse) | 1-20, insbesondere 2-12 |
| proteinhaltige Komponente pflanzlichen Ursprungs (Trockenmasse) | 0-20, insbesondere 3-7 |
| Casein | 0-20, insbesondere 2,5-15 |
| Wasser | 0-80, insbesondere 40-75, |

und die erhaltene Mischung gegebenenfalls getrocknet wird, oder
b) das mindestens zwei und vorzugsweise alle der folgenden Komponenten in den angegebenen Gewichtsanteilen aufweist:

| Komponente | Gewichtsanteil |
|---|---|
| Hydroxyaldehyd | 5-25, insbesondere 10-20 |
| proteinhaltige Komponente tierischen Ursprungs (Trockenmasse) | 5-25, insbesondere 10-20 |
| phenolische Oligomere enthaltende Komponente (Trockenmasse) | 4-40, insbesondere 5-30 |
| proteinhaltige Komponente pflanzlichen Ursprungs (Trockenmasse) | 1-25, insbesondere 3-12 |
| Casein | 0-40, insbesondere 5-30. |

Gegenstand der Erfindung ist auch Verwendung des Bindemittels gemäß der Erfindung, wie oben definiert, zur Herstellung eines Verbundwerkstoffs, insbesondere auf Basis eines cellulosehaltigen Materials, vorzugsweise Holz, Zellstoff, Stroh, Bagasse, Kenaf, Bambus, Sisal, Hanf, Kokosfaser, Papier, Pappe oder Karton und insbesondere Holz oder Papier.

Gegenstand der Erfindung ist auch Verfahren zur Herstellung eines Verbundwerkstoffs, bei dem das Bindemittel gemäß gemäß der Erfindung, wie oben definiert, mit einem cellulosehaltigen Material, vorzugsweise bei einer Temperatur im Bereich von 100 bis 250°C und insbesondere bei einem Druck von 1 bis 250 bar, bevorzugt 10 bis 180 bar, verarbeitet und insbesondere verpresst wird.

Gegenstand der Erfindung ist auch Verbundwerkstoff, der durch das oben definierte Verfahren erhältlich ist.

Der Begriff "Bindemittel" bezeichnet ein Mittel, das innerhalb eines Verbundwerkstoffs gleiche oder unterschiedliche Materialien und Substrate miteinander verbinden oder verkleben kann. Insbesondere kann Bindemittel stückige Materialien oder ausgedehnte Substrate adhäsiv, kohäsiv und/oder reaktiv miteinander verbinden oder verkleben. Das Bindemittel kann daher auch als Klebstoff bezeichnet werden.

Der Begriff "cellulosehaltige Materialien" bezeichnet insbesondere Materialien, die Cellulose, Hemicellulose, Holocellulose oder Lignocellulose enthalten. Beispiele für cellulosehaltige Materialien sind Holz, Zellstoff, Stroh, Bagasse, Kenaf, Bambus, Sisal, Hanf, Kokosfaser und Papier, insbesondere Holz und Papier. Cellulosehaltige Materialien können beispielsweise in Form von stückigen Materialien wie Spänen und Fasern oder in Form von ausgedehnten Substraten wie Strands, Furnieren, Kartons und Lagenhölzern vorliegen. Insbesondere können cellulosehaltige Materialien in Form von Vollholz, Holzschnitzeln, Sägespänen, Holzschliff, Holzmehl, Holzstaub und Holzstoff sowie in Form von Recyclingmaterialien wie Altholz oder Altpapier verwendet werden.

Erfindungsgemäß enthält das Bindemittel einen Hydroxyaldehyd. Dabei ist es bevorzugt, dass der Hydroxyaldehyd ein α-Hydroxy-Aldehyd, insbesondere ein α-Hydroxy-C₂-C₁₀-Aldehyd, bevorzugt ein α-Hydroxy-C₃-C₁₀-Aldehyd, besonders bevorzugt ein α-Hydroxy-C₃-C₅-Aldehyd, ganz besonders bevorzugt ein α,β-Dihydroxy-C₃-C₅-Aldehyd und am meisten bevorzugt Glycerinaldehyd ist.

Gemäß einer bevorzugten Ausführungsform wird der Hydroxyaldehyd *in situ* aus einem Polyol und einem Oxidationsmittel gebildet. Dabei wird als Polyol insbesondere ein Polyol mit mindestens zwei OH-Gruppen, insbesondere ein Polyol mit mindestens zwei vicinalen OH-Gruppen, bevorzugt ein C₂-C₁₀-Polyol mit mindestens zwei vicinalen OH-Gruppen, besonders bevorzugt ein C₃-C₁₀-Polyol mit mindestens zwei vicinalen OH-Gruppen, weiter bevorzugt ein C₃-C₅-Polyol mit mindestens zwei vicinalen OH-Gruppen, ganz besonders bevorzugt ein C₃-C₅-Polyol mit mindestens drei vicinalen OH-Gruppen und am meisten bevorzugt Glycerin verwendet. Als Oxidationsmittel wird vorzugsweise ein Peroxid und besonders bevorzugt Wasserstoffperoxid verwendet. In einer besonders bevorzugten Ausführungsform wird der Hydroxyaldehyd aus Glycerin und Wasserstoffperoxid gebildet. Das Polyol wird vorzugsweise in einer Menge von 1 bis 30 Gew.-%, insbesondere 4 bis 15 Gew.-%, vorzugsweise 6 bis 10 Gew.-% und besonders bevorzugt 7 bis 8 Gew.-%, bezogen auf die Gesamtmasse des Bindemittels, eingesetzt. Das Oxidationsmittel wird vorzugsweise in einer Menge von 0,5 bis 10 Gew.-%, insbesondere 1 bis 5 Gew.-%, vorzugsweise 1,5 bis 4 Gew.-% und besonders bevorzugt 2 bis 3 Gew.-%, bezogen auf die Gesamtmasse des Bindemittels, eingesetzt. Wird Wasserstoffperoxid als Oxidationsmittel verwendet, wird dieses bevorzugt in Form einer wässrigen Lösung insbesondere mit einer Konzentration von etwa 35 Gew.-% eingesetzt.

Als proteinhaltige Komponente tierischen Ursprungs wird vorzugsweise Hämoglobin, insbesondere Hämoglobin aus Tierblut, oder Proteinkonzentrat, insbesondere Proteinkonzentrat aus Tierblut verwendet. Vorzugsweise wird die proteinhaltige Komponente in Form eines Pulvers wie Tiervollblutpulver, insbesondere Pulver aus Tierblut der Kategorie 3, Plasmapulver oder Hämoglobinpulver eingesetzt. In einer anderen Ausführungsform wird als proteinhaltige Komponente tierischen Ursprungs ein Proteinkonzentrat eingesetzt, das durch Aufschluss von tierischen Abfallprodukten wie Knochen und Häuten gewonnen wird. Ein solches Proteinkonzentrat ist beispielsweise von der Fa. Saval erhältlich. Das Proteinkonzentrat kann insbesondere in Form eines Pulvers oder eines Konzentrats mit einem Feststoffgehalt von beispielsweise etwa 35 Gew.-% eingesetzt werden. Vorzugsweise wird die proteinhaltige Komponente tierischen Ursprungs in einer Menge, bezogen auf die Trockenmasse, von 1 bis 20 Gew.-%, insbesondere 3 bis 10 Gew.-%, vorzugsweise 4 bis 10 Gew.-%, bezogen auf die Gesamtmasse des Bindemittels, eingesetzt.

Das Bindemittel enthält ferner eine phenolische Oligomere enthaltende Komponente. Die phenolische Oligomere enthaltende Komponente ist vorzugsweise von Lignin abgeleitet. Bevorzugt weisen dabei die phenolischen Oligomere eine gewichtsmittlere molare Masse im Bereich von 1000 bis 5000 g/mol und insbesondere 2000 bis 3000 g/mol auf. Geeignete phenolische Oligomere enthaltende Komponenten sind insbesondere durch Aufschluss von Lignocellulosen nach dem Organosolv-Verfahren (auch als Sodaverfahren bezeichnet), dem Milox-Verfahren, dem Formacell-Verfahren, dem Organocell-Verfahren und vorzugsweise dem Sulfatverfahren (auch als Kraft-Prozess bezeichnet) erhältlich. Eine nach dem Sulfatverfahren erhältliche phenolische Oligomere enthaltenden Komponente wird auch als "Kraft-Lignin" bezeichnet. Die phenolische Oligomere enthaltende Komponente, vorzugsweise Kraft-Lignin, kann insbesondere in Form eines sprühgetrockneten Pulvers eingesetzt werden. Weiter ist es bevorzugt, dass die phenolische Oligomere enthaltende Komponente, insbesondere Kraft-Lignin, in einer Menge, bezogen auf die Trockenmasse, von 1 bis 20 Gew.-%, insbesondere 2 bis 15 Gew.-%, vorzugsweise 2 bis 12 Gew.-% und besonders bevorzugt 6 bis 10 Gew.-%, bezogen auf die Gesamtmasse des Bindemittels, eingesetzt wird.

In einer bevorzugten Ausführungsform enthält das erfindungsgemäße Bindemittel ferner
d) proteinhaltige Komponente pflanzlichen Ursprungs.

Dabei ist es besonders bevorzugt, dass die proteinhaltige Komponente pflanzlichen Ursprungs eine pflanzliche Schlempe ist. Der Begriff "pflanzliche Schlempe" bezeichnet einen von einem pflanzlichen Material abgeleiteten Prozessrückstand, wie er insbesondere als Destillationsrückstand beispielsweise bei der Herstellung von Bioethanol, als Pulpe beispielsweise bei der Produktion von Kartoffelstärke oder als Presskuchen beispielsweise bei der Saatölherstellung anfällt. Gegebenenfalls kann ein flüssiger Anteil des Prozessrückstands zur Bildung der pflanzlichen Schlempe etwa durch Filtration oder Fällung abgetrennt werden. Beispiele für geeignete pflanzliche Materialien sind Hopfen, Gerste, Weizen, Reis und Mais. Besonders bevorzugt ist eine pflanzliche Schlempe auf Basis von Getreide, insbesondere Weizen. Weiter ist es bevorzugt, dass die proteinhaltige Komponente pflanzlichen Ursprungs einen Proteingehalt von 10 bis 50 Gew.-%, insbesondere 20 bis 40 Gew.-% und am meisten bevorzugt etwa 30 Gew.-% aufweist. Die proteinhaltige Komponente pflanzlichen Ursprungs wird vorzugsweise in einer Menge, bezogen auf die Trockenmasse, von 0 bis 20 Gew.-%, insbesondere 1 bis 15 Gew.-%, vorzugsweise 3 bis 7 Gew.-% und besonders bevorzugt 4 bis 6 Gew.-%, bezogen auf die Gesamtmasse des Bindemittels, eingesetzt. Weiter ist es bevorzugt, dass das Bindemittel phenolische Oligomere enthaltende Komponente, insbesondere Kraft-Lignin, und proteinhaltige Komponente pflanzlichen Ursprungs, insbesondere pflanzliche Schlempe, in einem Gewichtsverhältnis, jeweils bezogen auf die Trockenmasse, von 3:1 bis 1:3, insbesondere 2:1 bis 1:2, bevorzugt 1,5:1 bis 1:1,5 und besonders bevorzugt etwa 1:1 enthält.

Bevorzugt enthält das Bindemittel ferner weitere proteinhaltige Komponente tierischen Ursprungs, insbesondere Casein. Die weitere proteinhaltige Komponente tierischen Ursprungs wird vorzugsweise in einer Menge, bezogen auf die Trockenmasse, von 0 bis 20 Gew.-%, insbesondere 1 bis 15 Gew.-%, vorzugsweise 2,5 bis 15 Gew.-% und besonders bevorzugt 2,5 bis 5 Gew.-%, bezogen auf die Gesamtmasse des Bindemittels, eingesetzt. Besonders bevorzugt enthält das Bindemittel ferner Calciumoxid oder Calciumhydroxid, insbesondere in einer Menge von 0,5 bis 5 Gew.-%, insbesondere 1 bis 4 Gew.-% und besonders bevorzugt 2 bis 3 Gew.-%, bezogen auf die Trockenmasse der weiteren proteinhaltigen Komponente tierischen Ursprungs.

Gemäß einer bevorzugten Ausführungsform enthält das Bindemittel ferner ein Amid und/oder einen Dialdehyd. Beispiele für geeignete Amide sind Caprolactam, Harnstoff und insbesondere Melamin. Vorzugsweise wird das Amid in einer Menge von 0 bis 40 Gew.-%, insbesondere 1 bis 30 Gew.-%, vorzugsweise 2 bis 10 Gew.-% und besonders bevorzugt 4 bis 6 Gew.-%, bezogen auf die Gesamtmasse des Bindemittels, eingesetzt. In einer besonders bevorzugten Ausführungsform wird das Amid in einer Menge von 0 bis 10 Gew.-%, insbesondere 1 bis 8 Gew.-%, vorzugsweise 2 bis 6 Gew.-% und besonders bevorzugt 4 bis 5 Gew.-%, bezogen auf die Gesamtmasse des Bindemittels, eingesetzt. In einer anderen besonders bevorzugten Ausführungsform wird das Amid in einer Menge von 1 bis 40 Gew.-%, insbesondere 10 bis 35 Gew.-% und vorzugsweise 20 bis 30 Gew.-%, bezogen auf die Gesamtmasse des Bindemittels, eingesetzt. Beispiele für geeignete Dialdehyde sind Glutaraldehyd und insbesondere Glyoxal. Der Dialdehyd wird vorzugsweise in einer Menge von 0 bis 10 Gew.-%, insbesondere 1 bis 8 Gew.-%, vorzugsweise 2 bis 6 Gew.-% und besonders bevorzugt 3 bis 4 Gew.- %, bezogen auf die Gesamtmasse des Bindemittels, eingesetzt. Besonders bevorzugt enthält das Bindemittel eine Kombination eines Amids und eines Dialdehyds und insbesondere eine Kombination von Melamin und Glyoxal. Vorzugsweise werden das Amid und der Dialdehyd in einem molaren Verhältnis von 1 : 1 bis 1 : 10, insbesondere 1 : 2 bis 1 : 7,5 und bevorzugt 1 : 2,5 bis 1 : 5 eingesetzt.

Gemäß einer weiteren bevorzugten Ausführungsform enthält das Bindemittel ferner eine Carbonsäure, ein Carbonsäuresalz und/oder ein Carbonsäureanhydrid, insbesondere Essigsäure oder ein Acetat, Maleinsäure oder ein Maleat und/oder Maleinsäureanhydrid. Die Carbonsäure, das Carbonsäuresalz und/oder das Carbonsäureanhydrid werden vorzugsweise in einer Menge von 0 bis 20 Gew.-%, insbesondere 1 bis 15 Gew.-%, vorzugsweise 2,5 bis 10 Gew.-% und besonders bevorzugt 2,5 bis 5 Gew.-%, bezogen auf die Gesamtmasse des Bindemittels, eingesetzt. Bindemittel mit Gehalt an Carbonsäure, Carbonsäuresalz und/oder Carbonsäureanhydrid eignen sich besonders für holzfreie cellulosehaltige Materialien wie Stroh, Papier, Pappe und Karton.

Das Bindemittel kann darüber hinaus Additive enthalten. Beispiele für geeignete Additive sind Netzmittel zur besseren Benetzung des Substrats, Entschäumer, Verdickungsmittel, Glättmittel, Flammschutzmittel, Farbstoffe und Konservierungsmittel wie Fungizide.

Üblicherweise werden Additive in einer Menge von bis zu 15 Gew.-%, insbesondere bis zu 10 Gew.-% und vorzugsweise bis zu 5 Gew.-%, bezogen auf die Gesamtmasse des Bindemittels, eingesetzt. Zur Erzielung besonders langer Lagerfähigkeit kann vorzugsweise ein Konservierungsmittel und insbesondere ein Fungizid wie Betanaphtol oder Thymol, bevorzugt in einer Menge von 0,1 bis 10 Gew.-%, insbesondere 0,5 bis 5 Gew.-% und besonders bevorzugt 1 bis 3 Gew.-%, bezogen auf die Gesamtmasse des Bindemittels, eingesetzt werden.

Das Bindemittel enthält ferner üblicherweise Wasser. Vorzugsweise weist das Bindemittel einen Wassergehalt von 0 bis 80 Gew.-% und insbesondere von 40 bis 75 Gew.-% auf.

Das erfindungsgemäße Bindemittel weist ferner vorzugsweise einen pH-Wert im Bereich von 8 bis 11, vorzugsweise einen pH-Wert im Bereich von 8,5 bis 10, bevorzugt einen pH-Wert im Bereich von 9 bis 10 und am meisten bevorzugt einen pH-Wert von etwa 9 auf.

Es ist weiter bevorzugt, dass das Bindemittel weniger als 5,0 Gew.-%, insbesondere weniger als 2,0 Gew.-%, bevorzugt weniger als 1,0 Gew.-%, besonders bevorzugt weniger als 0,5 Gew.-% Ammoniumsalze wie Ammoniumsulfat, Ammoniumalaune, Ammoniumligninsulfonat und Ammoniumhydrogenphosphat enthält und am meisten bevorzugt im Wesentlichen frei von Ammoniumsalzen ist.

Weiterhin ist es bevorzugt, dass das Bindemittel weniger als 2,0 Gew.-%, insbesondere weniger als 1,0 Gew.-%, bevorzugt weniger als 0,5 Gew.-%, besonders bevorzugt weniger als 0,1 Gew.-% Formaldehyd enthält und am meisten bevorzugt im Wesentlichen frei von Formaldehyd ist.

Erfindungsgemäß besonders bevorzugt ist ein Bindemittel, das durch Mischen der folgenden Komponenten erhältlich ist, wobei mindestens eine und vorzugsweise alle Komponenten in den angegebenen Mengen, bezogen auf die Gesamtmasse der Mischung, eingesetzt werden:

| Komponente | Gew.-% |
|---|---|
| Polyol | 1-30, insbesondere 4-15 |
| Oxidationsmittel | 0,5-10, insbesondere 1,5-4 |
| proteinhaltige Komponente tierischen Ursprungs (Trockenmasse) | 1-20, insbesondere 3-10 |
| phenolische Oligomere enthaltende Komponente (Trockenmasse) | 1-20, insbesondere 2-12 |
| proteinhaltige Komponente pflanzlichen Ursprungs (Trockenmasse) | 0-20, insbesondere 3-7 |
| Casein | 0-20, insbesondere 2,5-15 |
| Wasser | 0-80, insbesondere 40-75, |

und die erhaltene Mischung gegebenenfalls getrocknet wird.

Dabei stellen die oben definierten Bereiche für die Mengen der einzelnen Komponenten in Bezug auf die Gesamtmasse des Bindemittels weitere bevorzugte Bereiche für die Mengen der eingesetzten Komponenten in Bezug auf die Gesamtmasse der Mischung dar.

Weiterhin besonders bevorzugt ist ein Bindemittel, das mindestens zwei und vorzugsweise alle der folgenden Komponenten in den angegebenen Gewichtsanteilen aufweist:

| Komponente | Gewichtsanteil |
|---|---|
| Hydroxyaldehyd | 5-25, insbesondere 10-20 |
| proteinhaltige Komponente tierischen Ursprungs (Trockenmasse) | 5-25, insbesondere 10-20 |
| phenolische Oligomere | 4-40, insbesondere 5-30 |

| | |
|---|---|
| enthaltende Komponente (Trockenmasse) | |
| proteinhaltige Komponente pflanzlichen Ursprungs (Trockenmasse) | 1-25, insbesondere 3-12 |
| Casein | 0-40, insbesondere 5-30. |

Es hat sich überraschend gezeigt, dass das erfindungsgemäße Bindemittel eine Reihe von Eigenschaften aufweist, die besonders für die Herstellung von Verbundwerkstoffen vorteilhaft sind. Insbesondere härtet das Bindemittel unter den üblichen Bedingungen für die Herstellung von Verbundmaterialien wie Spanplatten kontrolliert und schnell aus und kann so insbesondere vorteilhaft in kontinuierlichen Herstellungsverfahren für Verbundwerkstoffe eingesetzt werden. Die so hergestellten Verbundwerkstoffe weisen hervorragende mechanische Stabilität und Wasserbeständigkeit auf. Insbesondere weisen die Verbundwerkstoffe mindestens eine Wasserbeständigkeit der Klasse P3 gemäß DIN EN 312-1 auf. Das Bindemittel ist zudem aus kostengünstig verfügbaren natürlichen Rohstoffen erhältlich und kann ohne gesundheitliche und ökologisch bedenkliche Komponenten wie Formaldehyd und Isocyanate gebildet werden. Außerdem ist das Bindemittel vorzugsweise als Einkomponentensystem ohne Kühlung über Monate lager- und transportfähig.

Üblicherweise wird das Bindemittel in unverdünnter Form eingesetzt. Alternativ kann das Bindemittel, beispielsweise als Vorstrich, auch verdünnt eingesetzt werden. Schließlich kann das Bindemittel auch in getrockneter Form eingesetzt werden.

Das erfindungsgemäße Bindemittel kann auch in Kombination mit bekannten Bindemitteln verwendet werden. Beispiele für geeignete bekannte Bindemittel sind polymeres Diisocyanat (PMDI), EmulsionsPolymer-Isocyanat (EPI), Polyvinylacetat (PVAC), Harze auf Basis von Furfural und Furfurylalkohol, Polyurethan, Epoxidharze und vernetzte Polymere auf Basis von gesättigten und ungesättigten Acrylaten. Das erfindungsgemäße Bindemittel ist mit bekannten Bindemitteln, insbesondere in Form handelsüblicher Dispersionen, in allen Mischungsverhältnissen kompatibel.

Das erfindungsgemäße Bindemittel eignet sich insbesondere zur Herstellung von Verbundwerkstoffen. Gegenstand der Erfindung ist daher auch die Verwendung des erfindungsgemäßen Bindemittels zur Herstellung von Verbundwerkstoffen, insbesondere auf Basis eines cellulosehaltigen Materials. Beispiele für geeignete cellulosehaltige Materialien sind Holz, Zellstoff, Stroh, Bagasse, Kenaf, Bambus, Sisal, Hanf, Kokosfaser, Papier, Pappe und Karton, insbesondere Holz und Papier. Insbesondere können cellulosehaltige Materialien in Form von Vollholz, Holzschnitzeln, Sägespänen, Holzschliff, Holzmehl, Holzstaub und Holzstoff sowie in Form von Recyclingmaterialien wie Altholz oder Altpapier verwendet werden.

Gegenstand der Erfindung ist zudem ein Verfahren zur Herstellung eines Verbundwerkstoffs, bei dem ein cellulosehaltiges Material mit dem erfindungsgemäßen Bindemittel verarbeitet wird. Das erfindungsgemäße Bindemittel bindet mit cellulosehaltigen Materialien insbesondere unter Wärme und vorzugsweise unter Wärme und Druck ab. Bevorzugt umfasst das Verfahren einen Schritt, bei dem das Bindemittel mit einem cellulosehaltigen Material verpresst wird. Typischerweise erfolgt die Verarbeitung bei Temperaturen von 100 bis 250°C und insbesondere bei einem Druck von 1 bis 250 bar, vorzugsweise 10 bis 180 bar.

Das Bindemittel kann auf allen gängigen Verarbeitungsmaschinen wie automatisierten Fertigungsanlagen, aber auch Handpressen, ohne besondere Anpassungen eingesetzt werden. Dabei sind alle bekannten und gängigen Verfahrensweisen auch mit dem erfindungsgemäßen Bindemittel durchführbar.

Über die Steuerung von Temperatur und Druck sind die Verarbeitungszeiten und das Abbindeverhalten des erfindungsgemäßen Bindemittels gut einstellbar. Dabei ist die Presszeit für Verbundwerkstoffplatten üblicherweise abhängig von der Art des cellulosehaltigen Materials, der Presstemperatur, dem Pressdruck und der Dicke der Platten. Dabei können mit dem erfindungsgemäßen Bindemittel unter üblichen Verarbeitungsbedingungen vorteilhafterweise Presszeiten von weniger als 10 s/mm Plattendicke realisiert werden

Gegenstand der Erfindung ist schließlich auch ein Verbundwerkstoff, der durch das erfindungsgemäße Verfahren erhältlich ist. Beispiele für geeignete Verbundwerkstoffe sind flächige und dreidimensional verformte Produkte und Formkörper, insbesondere für die Möbel- und Bauindustrie, wie Platten, insbesondere Möbelplatten, Baustoffplatten und Wärmedämmplatten, Ziegel, Palettenklötze, Betonschalungsteile, Strangpressteile und 3-D Formpressteile sowie staubgebundene Recycling-Produkte und Recycling-Papier-Platten.

Die Erfindung wird im Folgenden anhand von Ausführungsbeispielen näher erläutert.

### Ausführungsbeispiele

Es wurden 10 erfindungsgemäße Bindemittel gemäß der folgenden Tabelle gebildet und zur Herstellung verschiedener Verbundwerkstoffe eingesetzt:

| **Beispiel (Gew. -%)** | **1** | **2** | **3** | **4** | **5** | **6** | **7** | **8** | **9** | **10** |
|---|---|---|---|---|---|---|---|---|---|---|
| Glycerin¹⁾ | 6 | 8 | 10 | 10 | 5 | 7 | 10 | 5 | 15 | 7 |
| Wasserstoffperoxid²⁾ | 7 | 8 | 5 | 6 | 10 | 10 | 8 | 6 | 5 | 6 |
| tier. Protein³⁾ | 5 | 8 | 10 | 8 | 5 | 5 | 5 | 4 | 3 | 5 |
| Kraft-Lignin⁴⁾ | 25 | 5 | 15 | 10 | 7 | 12 | 10 | 10 | 30 | 20 |
| pflanzl. Schlempe⁵⁾ | 28 | | 8 | 8 | 7 | 12 | 15 | 20 | 10 | 15 |
| Casein | | | | 4 | | | 10 | 10 | | 15 |
| Melamin | | 15 | 10 | 6 | 10 | 6 | | | | |
| Glyoxal⁶⁾ | | 15 | 10 | | 10 | 7 | | | | |
| Paraffin⁷⁾ | | 2 | | | 1 | | | | | 1 |
| Fluorcarbonat | | | | 2 | | 4 | | 6 | | 4 |
| Maleinsäure | | | | 2 | | | | | | |
| Polyamidamin | | | | | 5 | | | | | |
| Epichlorhydrin | | | | 5 | | | | | | |
| Tannin | | | | | | | 5 | | 8 | |
| Hexamethylentetramin | | | 2 | | 5 | | 2 | | 4 | |
| Resorcin | | | | 2 | | 2 | | 3 | | |
| Naphtalinsulfonsäure | | 9 | | | | | | | | |
| Entschäumer | 1 | | | | | | | 1 | | |
| Mehl | | | | | | 10 | 10 | | | |
| 5-(Hydroxymethyl)-furfural | | | | 7 | | | | | | |
| Wasser | 28 | 30 | 30 | 30 | 35 | 25 | 25 | 35 | 25 | 27 |

| | | | | | | | | | | |
|---|---|---|---|---|---|---|---|---|---|---|
| ¹⁾ 85%ige wässrige Lösung ²⁾ 35%ige wässrige Lösung ³⁾ Beispiele 1-5 und 7-10: sprühgetrocknetes Hämoglobin Beispiel 6: Proteinkonzentrat der Fa. Saval ⁴⁾ 40%ige wässrige Lösung ⁵⁾ Feststoffgehalt 20 Gew.-% ⁶⁾ 35%ige wässrige Lösung ⁷⁾ 60%ige wässrige Lösung | | | | | | | | | | |

| **Beispiel (Gew.-%)** | **11** | **12** | **13** | **14** | **15** | **16** |
|---|---|---|---|---|---|---|
| Glycerin¹⁾ | 11 | 11 | 6 | 6 | 6 | 6 |
| Wasserstoffperoxid²⁾ | 7 | 7 | 7 | 7 | 7 | 7 |
| tier. Protein | 5 | 5 | 5 | 5 | 5 | 5 |
| Kraft-Lignin³⁾ | 50 | 30 | 20 | 25 | 25 | 30 |
| pflanzl. Schlempe⁴⁾ | | 20 | 20 | 22 | 24 | 20 |
| Casein | | | 3 | | | |
| CaO | | | 1,6 | | | |
| NaOH | | | 0,3 | | | |
| Silikat | | | 1 | | | |
| CuCl | | | 0,1 | | | |
| Caprolactam | | | | 5 | | |
| Glutaraldehyd | | | | | 3 | |
| Maleinsäureanhydrid | | | | | | 5 |
| Wasser | 27 | 27 | 36 | 30 | 30 | 27 |

| | | | | | | |
|---|---|---|---|---|---|---|
| ¹⁾ 80%ige wässrige Lösung ²⁾ 35%ige wässrige Lösung ³⁾ 40%ige wässrige Lösung ⁴⁾ Feststoffgehalt 20 Gew.-% | | | | | | |

### Beispiel 1 (Spanplatte)

Es wurde ein einkomponentiges Bindemittel mit der Zusammensetzung 1 gemäß der obigen Tabelle durch Mischen der angegebenen Ausgangskomponenten gebildet. Zur Herstellung einer Spanplatte wurden Kiefernholzspäne (Siebfraktion >0, 6 mm x 4 mm, 4 Gew.-% Feuchtegehalt) mit dem Bindemittel im Sprühverfahren in einem Trommelmischer gemischt, um eine gleichmäßige Benetzung der Späne zu erreichen. Der Massenanteil des Bindemittels betrug 8 Gew.-%.

Die mit dem Bindemittel benetzten Späne wurden gleichmäßig auf ein Pressblech gestreut, das mit einem handelsüblichen Trennmittel benetzt war, so dass ein Spänekuchen entstand. Der Spänekuchen wurde per Hand vorgepresst und danach in einer Labor-Plattenpresse bei einer Temperatur von 200°C über einen Zeitraum von 120 s mit einem Druck von 150 bar verpresst. Die Presszeit wurde ab dem vollständigen Druckaufbau gemessen. Es wurde eine Spanplatte mit einer Dicke von 12 mm erhalten, d.h. die Presszeit betrug 10 s/mm Plattendicke.

Für die erhaltene Spanplatte wurden die folgenden technischen Werte gemäß DIN EN 312-1 (2010) bestimmt:
Dickenquellung: 14%
Biegefestigkeit: 15,2 N/mm²
Biege-E-Modul: 2954 N/mm²
Querzugsfestigkeit: 0,62 N/mm²

Damit wurden die technischen Werte für Spanplatten der Klasse P3 gemäß DIN EN 312-1 (2010) erreicht.

Die Formaldehydemission der erhaltenen Spanplatte wurde nach der Kammermethode gemäß DIN EN 717-1 (2006) bestimmt. Diese betrug nach 12 h 0,024 mg/m³, nach 24 h 0,019 mg/m³ und nach 240 h 0,005 mg/m³. Damit wurde überraschenderweise sogar die natürliche Formaldehydemission von unbehandelten Kiefernholzspänen um das 6-fache unterschritten.

### Beispiel 2 (Oriented strand board-Platte)

Es wurde ein einkomponentiges Bindemittel mit der Zusammensetzung 2 gemäß der obigen Tabelle durch Mischen der angegebenen Ausgangskomponenten gebildet. Zur Herstellung einer 12 mm dicken OSB (Oriented Strand Board)-Platte wurden Holz-Flakes (2-4 Gew.-% Feuchtegehalt) mit dem Bindemittel per Trommelverfahren benetzt wurden. Der Massenanteil des Bindemittels betrug 8 Gew.-%.

Die mit dem Bindemittel benetzten Flakes wurden zu einem Kuchen gestreut und zum Verpressen in eine Plattenpresse eingelegt. Anschließend wurde der so präparierte Kuchen bei einer Temperatur von 200°C und einem Druck von 165 bar über einen Zeitraum von 120 s zu einer OSB-Platte verpresst.

Die technischen Werte für OSB-Platten der Klasse P3 gemäß DIN EN 312-1 (2010) wurden erreicht.

### Beispiel 3 (Dünnspanplatte)

Es wurde ein einkomponentiges Bindemittel mit der Zusammensetzung 3 gemäß der obigen Tabelle durch Mischen der angegebenen Ausgangskomponenten gebildet. Zur Herstellung einer Dünnspanplatte (3,0 mm) mit einem spezifischen Gewicht von 820 kg/m³ nach dem Mendeverfahren auf einem Kalander (AUMA 30) wurden Kiefernholzspäne (Siebfraktion >0,6 mm x 4 mm) in einem Trommelmischer (Lödige) mit 115 kg Bindemittel (entsprechend einem Bindemittelanteil von 14 Gew.-%) benetzt.

Die 3,0 mm starke Platte wurde über 30 s bei 140 bar Druck und einer Temperatur von 175°C gebildet. Der Vorschub der Kalanderanlage betrug 22 m/min.

Die technischen Werte für Dünnspanplatten der Klasse P3 gemäß DIN EN 312-1 (2010) wurden erreicht.

### Beispiel 4 (Spanplatte)

Es wurde ein einkomponentiges Bindemittel mit der Zusammensetzung 4 gemäß der obigen Tabelle durch Mischen der angegebenen Ausgangskomponenten gebildet. Zur Herstellung einer Spanplatte (22 mm Dicke) wurden Kiefernholzspäne (Siebfraktion >0,6 mm x 4 mm, 2,5 Gew.-% Feuchtegehalt) mit dem Bindemittel im Sprühverfahren gemischt und ein Spänekuchen gebildet. Der Massenanteil des Bindemittels betrug 8 Gew.-%.

Der Spänekuchen wurde bei einer Temperatur von 200°C, einem Druck von 155 bar und einer Presszeit von 12 s/mm Plattendicke in einer Einetagenpresse verpresst.

Die technischen Werte für Spanplatten der Klasse P3 gemäß DIN EN 312-1 (2010) wurden erreicht.

### Beispiel 5 (Mitteldichte Faserplatte)

Es wurde ein einkomponentiges Bindemittel mit der Zusammensetzung 5 gemäß der obigen Tabelle durch Mischen der angegebenen Ausgangskomponenten gebildet. Zur Herstellung einer mitteldichten Faserplatte (MDF-Platte) wurden über einen Refiner zerfaserte Kiefern-Hackschnitzel auf einen Feuchtegehalt von etwa 1 Gew.-% getrocknet. Das Bindemittel wurde mittels Trommelbeleimung im Sprühverfahren eingebracht. Der Massenanteil des Bindemittels betrug 8 Gew.-%.

Die benetzten Holzfasern wurden bei 185°C und einem Druck von 140 bar verpresst. Die Presszeit in einer kontinuierlichen Presse betrug 8 s/mm Plattendicke. Eine 6 mm Platte wurde in 48 s produziert.

Die technischen Werte für MDF-Platten der Klasse P3 gemäß DIN EN 312-1 (2010) wurden erreicht.

### Beispiel 6 (Sperrholzplatte)

Es wurde ein zweikomponentiges Bindemittel mit der Zusammensetzung 6 gemäß der obigen Tabelle durch Mischen der angegebenen Ausgangskomponenten gebildet. Dabei enthielt die Bindemittelkomponente A Glycerin, Wasserstoffperoxid, Proteinkonzentrat der Fa. Saval, pflanzliche Schlempe und Mehl und die Bindemittelkomponente B Kraft-Lignin, Fluorcarbonat, Melamin, Glyoxal und Resorcin.

Zum Herstellen von Sperrholzplatten (Lagenholz) wurde auf einer Seite eines 2 mm dicken Birkenfurniers die Bindemittelkomponente A aufgewalzt, die mit Weizenmehl Typ 405 gestreckt wurde, um den Feststoffgehalt zu erhöhen und ein "Durchschlagen" des Bindemittels zu verhindern. Die Auftragsmenge der Bindemittelkomponente A betrug 80 g/m². Auf eine Seite eines zweiten Birkenfurniers wurde die Bindemittelkomponente B aufgewalzt. Die Auftragsmenge der Bindemittelkomponente B betrug 40 g/m². Anschließend wurden die mit den Bindemittelkomponenten beaufschlagten Oberseiten der beiden Furniere kreuzweise aufeinandergelegt und bei einer Presstemperatur von 140°C und einem Druck von 65 bar für eine Zeit von 120 s miteinander verpresst.

### Beispiel 7 (Furnierte Fläche)

Es wurde ein einkomponentiges Bindemittel mit der Zusammensetzung 7 gemäß der obigen Tabelle durch Mischen der angegebenen Ausgangskomponenten gebildet. Zur Herstellung einer furnierten Fläche wurde das Bindemittel mittels einer doppelseitigen Leimauftragswalze beidseitig auf eine Spanplatte mit 80 g/m² als Trägerplatte aufgewalzt. Die beleimte Trägerplatte wurde auf Eichenfurnier mit einer Dicke von 0,8 mm aufgelegt. Die Oberseite wurde ebenfalls mit einem Eichenfurnier belegt und einer Kurztaktpresse zugeführt. Der Pressdruck betrug 70 N/mm² und die Presszeit 90 s bei 110°C.

### Beispiel 8 (Spanplatte)

Es wurde ein einkomponentiges Bindemittel mit der Zusammensetzung 8 gemäß der obigen Tabelle durch Mischen der angegebenen Ausgangskomponenten gebildet. Zur Herstellung einer Spanplatte (16 mm Dicke) wurden Kiefernholzspäne (Siebfraktion >0,6 mm x 4 mm, 2-4 Gew.-% Feuchtegehalt) mit dem Bindemittel im Sprühverfahren gemischt und ein Spänekuchen gebildet. Der Massenanteil des Bindemittels betrug 7 Gew.-%.

Der Spänekuchen wurde bei einer Temperatur von 210°C und einem Druck von 150 bar mit einer Presszeit von 130 s auf einer Einetagenpresse verpresst.

Die technischen Werte für Spanplatten der Klasse P3 gemäß DIN EN 312-1 (2010) wurden erreicht.

### Beispiel 9 (Strohplatte)

Es wurde ein einkomponentiges Bindemittel mit der Zusammensetzung 9 gemäß der obigen Tabelle durch Mischen der angegebenen Ausgangskomponenten gebildet. Das Bindemittel wurde mittels eines Chargenmischers (Lödige) mit zwei Dosierdüsen auf unbehandelte Strohfasern mit einer Länge von bis zu 20 mm (ca. 6 Gew.-% Feuchtegehalt) aufgebracht. Der Massenanteil des Bindemittels betrug 10 Gew.-%.

Die benetzten Strohfasern wurden bei 180°C und einem Druck von 140 bar verpresst. Die Presszeit in einer Einetagenpresse betrug 12 s/mm Plattendicke. Es wurde mittels Distanzblechen eine Platte von 20 mm Plattendicke mit einem spezifischen Gewicht von 550 kg/m³ hergestellt.

Es wurden folgende Werte nach DIN EN 622 ermittelt:
Rohdichte: 550 kg/m³
Querzugfestigkeit: 0,58 N/mm²
Dickenquellung (24 h): 14,3%
Biegefestigkeit: 28,2 N/mm²

Die technischen Werte für Faserplatten der Klasse P3 gemäß DIN EN 622 wurden somit erreicht.

Somit ermöglicht das erfindungsgemäße Bindemittel auch die Herstellung von Verbundwerkstoffen auf Basis von cellulosehaltigen Naturprodukten wie Stroh, deren Oberfläche eine Silikat- oder Wachsschicht aufweist. Dies ist besonders überraschend, weil klassische Bindemittel etwa auf Basis von Aminoplasten für die Verarbeitung solcher Naturprodukte nicht geeignet sind. Anstelle des Strohs können auch andere cellulosehaltige Fasern, vorzugsweise auf Basis von jungen Pflanzen oder Einjahrespflanzen oder von geschredderten Hülsen wie Maiskolben, Erdnussschalen und dergleichen sowie Recycling-Papiere verwendet werden.

### Beispiel 10 (Faserplatte)

Es wurde ein einkomponentiges Bindemittel mit der Zusammensetzung 10 gemäß der obigen Tabelle durch Mischen der angegebenen Ausgangskomponenten gebildet. Zur Herstellung einer Faserplatte wurden über einen Refiner zerfaserte Holzschnitzel auf einen Feuchtegehalt von etwa 4 Gew.-% getrocknet. Das Bindemittel wurde mittels Pflugscharmischer und Airless-Spritzverfahren auf die Holzfasern aufgespritzt. Der Massenanteil des Bindemittels betrug 8 Gew.-%. Die benetzten Holzfasern wurden bei 200°C mittels Distanzblechen zu einer 20 mm starken Platte mit einem spezifischen Gewicht von 120 kg/m³ verpresst. Die Presszeit betrug 160 s und damit 8 s/mm Plattendicke.

Die Biegefestigkeit der erhaltenen Faserplatte gemäß DIN EN 622-4 betrug 1,3 N/mm². Damit wurden die technischen Werte für poröse Holzfaserplatten zur Außenanwendung gemäß DIN EN 622-4 erreicht.

Die Emission von flüchtigen organischen Verbindungen (volatile organic compounds, VOC) aus der erhaltenen Faserplatte nach 5 h, 24 h und 48 h ist in der folgenden Tabelle wiedergegeben:

| | nach 5 h | nach 24 h | nach 48 h |
|---|---|---|---|
| VOC (<C₆) | 34 µg/m³ | 46 µg/m³ | 65 µg/m³ |
| VOC (C₆-C₁₆) | 34 µg/m³ | 29 µg/m³ | 27 µg/m³ |
| VOC (Gesamt) | 68 µg/m³ | 75 µg/m³ | 92 µg/m³ |

## Patentansprüche

1. Bindemittel für cellulosehaltige Materialien, das
a) Hydroxyaldehyd,
b) proteinhaltige Komponente tierischen Ursprungs und
c) phenolische Oligomere umfassende Komponente
enthält,
wobei:
die phenolischen Oligomere eine gewichtsmittlere molare Masse im Bereich von 1000 bis 5000 g/mol und insbesondere 2000 bis 3000 g/mol aufweisen
und
die phenolische Oligomere enthaltende Komponente eine Kraft-Lignin ist.

2. Bindemittel nach Anspruch 1, bei dem der Hydroxyaldehyd ein α-Hydroxy-Aldehyd, insbesondere ein α-Hydroxy-C₂-C₁₀-Aldehyd, bevorzugt α-Hydroxy-C₃-C₁₀-Aldehyd, besonders bevorzugt ein α-Hydroxy-C₃-C₅-Aldehyd, ganz besonders bevorzugt ein α,β-Dihydroxy-C₃-C₅-Aldehyd und am meisten bevorzugt Glycerinaldehyd ist.

3. Bindemittel nach Anspruch 1 oder 2, bei dem der Hydroxyaldehyd *in situ* aus einem Polyol mit mindestens zwei OH-Gruppen, insbesondere einem Polyol mit mindestens zwei vicinalen OH-Gruppen, bevorzugt einem C₂-C₁₀-Polyol mit mindestens zwei vicinalen OH-Gruppen, besonders bevorzugt einem C₃-C₁₀-Polyol mit mindestens zwei vicinalen OH-Gruppen, weiter bevorzugt einem C₃-C₅-Polyol mit mindestens zwei vicinalen OH-Gruppen, ganz besonders bevorzugt ein C₃-C₅-Polyol mit mindestens drei vicinalen OH-Gruppen und am meisten bevorzugt Glycerin, und einem Oxidationsmittel, insbesondere einem Peroxid und besonders bevorzugt Wasserstoffperoxid, gebildet wird.

4. Bindemittel nach einem der Ansprüche 1 bis 3, bei dem die proteinhaltige Komponente tierischen Ursprungs Hämoglobin, insbesondere Hämoglobin aus Tierblut, enthält.

5. Bindemittel nach einem der Ansprüche 1 bis 4, das ferner d) proteinhaltige Komponente pflanzlichen Ursprungs, insbesondere eine pflanzliche Schlempe, enthält.

6. Bindemittel nach einem der Ansprüche 1 bis 5, das weitere proteinhaltige Komponente tierischen Ursprungs, insbesondere Casein, enthält.

7. Bindemittel nach einem der Ansprüche 1 bis 6, das ferner ein Amid, vorzugsweise Caprolactam, Harnstoff oder insbesondere Melamin, und/oder einen Dialdehyd, vorzugsweise Glutaraldehyd oder insbesondere Glyoxal, enthält.

8. Bindemittel nach einem der Ansprüche 1 bis 7, das ferner eine Carbonsäure, ein Carbonsäuresalz und/oder ein Carbonsäureanhydrid, insbesondere Essigsäure oder ein Acetat, Maleinsäure oder ein Maleat und/oder Maleinsäureanhydrid, enthält.

9. Bindemittel nach einem der Ansprüche 1 bis 8, das einen pH-Wert im Bereich von 7 bis 12, insbesondere einen pH-Wert im Bereich von 8 bis 11, vorzugsweise einen pH-Wert im Bereich von 8,5 bis 10, bevorzugt einen pH-Wert im Bereich von 9 bis 10 und am meisten bevorzugt einen pH-Wert von etwa 9 aufweist.

10. Bindemittel nach einem der Ansprüche 1 bis 9, das weniger als 5,0 Gew.-%, insbesondere weniger als 2,0 Gew.-%, bevorzugt weniger als 1,0 Gew.-%, besonders bevorzugt weniger als 0,5 Gew.-% Ammoniumsalze enthält und am meisten bevorzugt im Wesentlichen frei von Ammoniumsalzen ist.

11. Bindemittel nach einem der Ansprüche 3 bis 10, das:
a) durch Mischen der folgenden Komponenten erhältlich ist, wobei mindestens eine und vorzugsweise alle Komponenten in den angegebenen Mengen eingesetzt werden:
| Komponente | Gew.-% |
|---|---|
| Polyol | 1-30, insbesondere 4-15 |
| Oxidationsmittel | 0,5-10, insbesondere 1,5-4 |
| proteinhaltige Komponente tierischen Ursprungs (Trockenmasse) | 1-20, insbesondere 3-10 |
| phenolische Oligomere enthaltende Komponente (Trockenmasse) | 1-20, insbesondere 2-12 |
| proteinhaltige Komponente pflanzlichen Ursprungs (Trockenmasse) | 0-20, insbesondere 3-7 |
| Casein | 0-20, insbesondere 2,5-15 |
| Wasser | 0-80, insbesondere 40-75, |
und die erhaltene Mischung gegebenenfalls getrocknet wird, oder
b) das mindestens zwei und vorzugsweise alle der folgenden Komponenten in den angegebenen Gewichtsanteilen aufweist:
| Komponente | Gewichtsanteil |
|---|---|
| Hydroxyaldehyd | 5-25, insbesondere 10-20 |
| proteinhaltige Komponente tierischen Ursprungs (Trockenmasse) | 5-25, insbesondere 10-20 |
| phenolische Oligomere enthaltende Komponente (Trockenmasse) | 4-40, insbesondere 5-30 |
| proteinhaltige Komponente | 1-25, insbesondere 3-12 |
| pflanzlichen Ursprungs (Trockenmasse) | |
| Casein | 0-40, insbesondere 5-30. |

12. Verwendung des Bindemittels gemäß einem der Ansprüche 1 bis 11 zur Herstellung eines Verbundwerkstoffs, insbesondere auf Basis eines cellulosehaltigen Materials, vorzugsweise Holz, Zellstoff, Stroh, Bagasse, Kenaf, Bambus, Sisal, Hanf, Kokosfaser, Papier, Pappe oder Karton und insbesondere Holz oder Papier.

13. Verfahren zur Herstellung eines Verbundwerkstoffs, bei dem das Bindemittel gemäß einem der Ansprüche 1 bis 11 mit einem cellulosehaltigen Material, vorzugsweise bei einer Temperatur im Bereich von 100 bis 250°C und insbesondere bei einem Druck von 1 bis 250 bar, bevorzugt 10 bis 180 bar, verarbeitet und insbesondere verpresst wird.

14. Verbundwerkstoff, der durch das Verfahren nach Anspruch 13 erhältlich ist.

## Claims

1. Binding agent for cellulose-containing materials, containing
a) hydroxy aldehyde,
b) protein-containing components of animal origin, and
c) phenolic oligomers comprising component
wherein:
the phenolic oligomers have a medium weight molar mass in a range of 1000 to 5000 g/mol and in particular of 2000 to 3000 g/mol
and
the phenolic oligomers comprising component is a kraft lignin.

2. Binding agent according to claim 1, wherein the hydroxy aldehyde is an α-hydroxy-aldehyde, in particular α-hydroxy-C₂-C₁₀-aldehyde, preferably α-hydroxy-C₃-C₁₀-aldehyde, particularly preferred an α-hydroxy-C₃-C₅-aldehyde, more particularly preferred an α,*β*-dihydroxy-C₃-C₅-aldehyde, and most preferred glycerol-aldehyde.

3. Binding agent according to claim 1 or 2, wherein the hydroxy aldehyde is formed in situ from a polyol having at least two OH-groups, in particular a polyol having at least two vicinal OH-groups, preferably a C₂-C₁₀-polyol having at least two vicinal OH-groups, particularly preferred a C₃-C₁₀-polyol having at least two vicinal OH-groups, further preferred a C₃-C₅-polyol having at least two vicinal OH-groups, more particularly preferred a C₃-C₅-polyol having at least three vicinal OH-groups, and most preferred glycerol, and an oxidating agent, in particular a peroxide and more particularly preferred hydrogen peroxide.

4. Binding agent according to any one of claims 1 to 3, wherein the protein-containing component of animal origin contains hemoglobin, in particular hemoglobin from animal blood.

5. Binding agent according to any one of claims 1 to 4, further containing d) protein-containing component of plant origin, in particular a plant mash.

6. Binding agent according to any one of claims 1 to 6, further containing protein-containing component of animal origin, in particular casein.

7. Binding agent according to any one of claims 1 to 7, further containing an amide, preferably caprolactam, urea or in particular melamine and/or a dialdehyde, preferably glutaraldehyde or in particular glyoxal.

8. Binding agent according to any one of claims 1 to 8, further containing a carboxylic acid, a carboxylic acid salt and/or a carboxylic acid anhydride, in particular acetic acid or an acetate, maleic acid or a maleate and/or maleic acid anhydride.

9. Binding agent according to any one of claims 1 to 9, having a pH-value in the range of between 7 to 12, in particular a pH-value in the range of 8 to 11, preferably a pH-value in the range of 8.5 to 10, preferred a pH-value in the range of 9 to 10, and most preferably a pH-value of about 9.

10. Binding agent according to any one of claims 1 to 10, containing less than 5.0 wt%, in particular less than 2.0 wt%, preferably less than 1.0 wt%, particularly preferred less than 0.5 wt% of ammonium salts and most preferably being essentially free from ammonium salts.

11. Binding agent according to any one of claims 3 to 11, obtainable by:
a) Mixing the following components,
wherein at least one and preferably all components are used in the amounts as given:
| Component | wt% |
|---|---|
| Polyol | 1-30, in particular 4-15 |
| Oxidating agent | 0.5-10, in particular 1,5-4 |
| Protein-containing component of animal origin (dry mass) | 1-20, in particular 3-10 |
| phenolic oligomers containing component (dry mass) | 1-20, in particular 2-12 |
| Protein-containing component of plant origin (dry mass) | 0-20, in particular 3-7 |
| Casein | 0-20, in particular 2.5-15 |
| Water | 0-80, in particular 40-75, |
and optionally the mixture as obtained is dried,
or
b) having at least two and preferably all of the following components at the percentages by weight as indicated:
| Component | Percentage by weight |
|---|---|
| Hydroxy aldehyde | 5-25, in particular 10-20 |
| Protein-containing component of animal origin (dry mass) | 5-25, in particular 10-20 |
| phenolic oligomers containing component (dry mass) | 4-40, in particular 5-30 |
| Protein-containing component of plant origin (dry mass) | 1-25, in particular 3-12 |
| Casein | 0-40, in particular 5-30. |

12. Use of the binding agent according to any one of claims 1 to 12 for producing a c omposite material, in particular on the basis of a cellulose-containing material, preferably wood, pulp, straw, bagasse, kenaf, bamboo, sisal, hemp, coconut fiber, paper, paperboard or carton, and in particular wood or paper.

13. Method for producing a composite material, wherein the binding agent according to any one of claims 1 to 12 is processed with a cellulose-containing material, preferably at a temperature in the range of 100 to 250°C and in particular at a pressure of 1 to 250 bar, preferably 10 bis 180 bar, and in particular is pressed.

14. Composite material, obtainable by a method according to claim 14.

## Revendications

1. Liant pour des matériaux contenant de la cellulose, qui contient
a) un hydroxyaldéhyde,
b) un composant protéique d'origine animale et
c) un composant comprenant des oligomères phénoliques,
dans lequel :
les oligomères phénoliques présentent un poids molaire moyen dans la plage de 1000 à 5000 g/mol et en particulier 2000 à 3000 g/mol
et
le composant contenant des oligomères phénoliques est une lignine kraft.

2. Liant selon la revendication 1, où l'hydroxyaldéhyde est un α-hydroxy-aldéhyde, en particulier un α-hydroxy-aldéhyde en C₂-C₁₀, de manière préférée un α-hydroxy-aldéhyde en C₃-C₁₀, de manière particulièrement préférée un α-hydroxy-aldéhyde en C₃-C₅, de manière très particulièrement préférée un α, ß-dihydroxy-aldéhyde en C₃-C₅, et idéalement une glycéraldéhyde.

3. Liant selon la revendication 1 ou 2, où l'hydroxyaldéhyde est formé in situ à partir d'un polyol avec au moins deux groupes OH, en particulier d'un polyol avec au moins deux groupes OH vicinaux, de manière préférée d'un polyol en C₂-C₁₀ avec au moins deux groupes OH vicinaux, de manière particulièrement préférée d'un polyol en C₃-C₁₀ avec au moins deux groupes OH vicinaux, de manière davantage préférée d'un polyol en C₃-C₅ avec au moins deux groupes OH vicinaux, de manière très particulièrement préférée un polyol en C₃-C₅ avec au moins trois groupes OH vicinaux et idéalement de la glycérine, et d'un agent d'oxydation, en particulier d'un peroxyde et de manière particulièrement préférée d'un peroxyde d'hydrogène.

4. Liant selon l'une quelconque des revendications 1 à 3, où le composant protéique d'origine animale de l'hémoglobine, en particulier de l'hémoglobine issue de sang d'animal.

5. Liant selon l'une quelconque des revendications 1 à 4, qui contient en outre d) un composant protéique d'origine végétale, en particulier une drêche végétale.

6. Liant selon l'une quelconque des revendications 1 à 6, qui contient un autre composant protéique d'origine animale, en particulier de la caséine.

7. Liant selon l'une quelconque des revendications 1 à 7, qui contient en outre un amide, de préférence du caprolactame, de l'urée ou en particulier de la mélamine, et/ou un dialdéhyde, de préférence du glutaraldéhyde ou en particulier du glyoxal.

8. Liant selon l'une quelconque des revendications 1 à 8, qui comprend en outre un acide carboxylique, un sel d'acide carboxylique et/ou un anhydride carboxylique, en particulier de l'acide acétique ou un acétate, de l'acide maléique ou un maléate et/ou de l'anhydride d'acide maléique.

9. Liant selon l'une quelconque des revendications 1 à 9, qui présente une valeur pH dans la plage de 7 à 12, en particulier une valeur pH dans la plage de 8 à 11, de préférence une valeur pH dans la plage de 8,5 à 10, de manière préférée une valeur pH dans la plage de 9 à 10 et idéalement une valeur pH d'environ 9.

10. Liant selon l'une quelconque des revendications 1 à 10, qui contient moins de 5,0 % en poids, en particulier moins de 2,0 % en poids, de manière préférée moins de 1,0 % en poids, de manière particulièrement préférée moins de 0,5 % en poids de sels d'ammonium et est idéalement sensiblement sans sels d'ammonium.

11. Liant selon l'une quelconque des revendications 3 à 11, qui :
a) est obtenu par le mélange des composants suivants, dans lequel au moins un et de préférence tous les composants sont employés dans les quantités indiquées :
| Composant | % en poids |
|---|---|
| Polyol | 1-30, en particulier 4-15 |
| Agent d'oxydation | 0,5-10, en particulier 1,5-4 |
| Composant protéique d'origine animale (masse sèche) | 1-20, en particulier 3-10 |
| Composant contenant des oligomères phénoliques (masse sèche) | 1-20, en particulier 2-12 |
| Composant protéique d'origine végétale (masse sèche) | 0-20, en particulier 3-7 |
| Caséine | 0-20, en particulier 2,5-15 |
| Eau | 0-80, en particulier 40-75, |
et le mélange obtenu est éventuellement séché ou
b) présente les au moins deux et de préférence tous les composants suivants dans les pourcentages en poids indiqués :
| Composant | Pourcentage en poids |
|---|---|
| Hydroxyaldéhyde | 5-25, en particulier 10-20 |
| Composant protéique d'origine animale (masse sèche) | 5-25, en particulier 10-20 |
| Composant contenant des oligomères phénoliques (masse sèche) | 4-40, en particulier 5-30 |
| Composant protéique d'origine végétale (masse sèche) | 1-25, en particulier 3-12 |
| Caséine | 0-40, en particulier 5-30. |

12. Utilisation du liant selon l'une quelconque des revendications 1 à 12 pour fabriquer un matériau composite, en particulier à base d'un matériau contenant de la cellulose, de préférence du bois, de la pâte à papier, de la paille, de la bagasse, du kenaf, du bambou, du sisal, du chanvre, de la fibre de coco, du papier, du carton-pâte ou du carton et en particulier du bois ou du papier.

13. Procédé de fabrication d'un matériau composite, où le liant selon l'une quelconque des revendications 1 à 12 est traité, en particulier est compressé avec un matériau contenant de la cellulose, de préférence à une température dans la plage de 100 à 250 °C et en particulier à une pression de 1 à 250 bar, de manière préférée de 10 à 180 bar.

14. Matériau composite, qui peut être obtenu par le procédé selon la revendication 14.
